# DEMANDE DE BREVET EUROPEEN

(11) **EP 4 672 225 A1**
(43) Date de publication de la demande: **31.12.2025**
(21) Numéro de dépôt: 25185297.6
(22) Date de dépôt: 25.06.2025
(51) Int. Cl.: G10K 11/172, B32B 3/12, F02C 7/24

(54) **DISPOSITIF D'ISOLATION ACOUSTIQUE POUR UN AERONEF**

(30) Priorité: 28.06.2024 FR 2407085
(71) Demandeur: AIRBUS OPERATIONS (S.A.S.), 31060 Toulouse (FR)
(72) Inventeur: CAZEAUX, Laurent, 31060 Toulouse (FR); CARAZO MENDEZ, Arnulfo, 31060 Toulouse (FR); ROSSI, Léana, 31060 Toulouse (FR); PALANI, Suresh, 31060 Toulouse (FR); BOUKHORS, Kevin, 31060 Toulouse (FR)
(74) Mandataire: BCF Global

(57) **Abrégé**

L'invention concerne un dispositif d'isolation acoustique, au moins une cavité (9), dite cavité quart-d'onde, un premier accolement de deux parois (4-1, 5-1), respectivement de la première bande (4) et de la deuxième bande (5), au contact l'une de l'autre, de sorte qu'un passage (10) est ménagé entre ladite cavité (9) et une autre cavité (8), ladite autre cavité (8), appelée cavité Helmholtz, fermée par un bord de fermeture, un deuxième accolement de deux parois (4-2, 5-2), respectivement de la première bande (4) et de la deuxième bande (5), au contact l'une de l'autre, chacune des parois (4-1, 5-1 ; 4-2, 5-2) desdits premier et deuxième accolements comprenant une portion disposée le long dudit bord de fermeture de la cavité Helmholtz (8), dite portion sacrificielle et formant extrémité du revêtement (1).

## Description

### Domaine technique

La présente invention concerne le domaine des structures d'isolation acoustique. Elle porte en particulier sur un revêtement d'isolation acoustique à structure alvéolaire. Le revêtement objet de l'invention peut avoir des applications, en particulier dans le domaine aéronautique, par exemple dans des nacelles de groupes propulseurs d'aéronef.

### Technique antérieure

Des revêtements ou panneaux comportant une structure alvéolaire constituée de cellules ou alvéoles, c'est-à-dire de volumes unitaires creux juxtaposés, sont employés dans de nombreux domaines techniques, notamment dans le domaine aéronautique. Ils peuvent présenter une grande rigidité pour une masse faible. Les revêtements comportant une structure alvéolaire ayant des cellules ouvertes sur une face, ou à tout le moins des cellules communiquant avec l'extérieur du panneau, sont employés pour leurs propriétés d'isolation acoustique. De tels panneaux sont parfois appelés panneaux acoustiques.

Les panneaux ou revêtements à structure alvéolaire peuvent être formés en divers matériaux par exemple plastiques, composites, ou métalliques. Les cellules peuvent présenter diverses géométries. Une forme bien connue de structure alvéolaire présente des cellules en forme de prisme droit de base hexagonale. On parle souvent de structure « en nid d'abeilles » pour désigner ce type de structure à cellules hexagonales, mais cette expression est également employée par abus de langage pour désigner des panneaux alvéolaires présentant d'autres formes de cellules.

Ainsi, un panneau ou revêtement acoustique classique comprend généralement un noyau en nid d'abeilles interposé entre une feuille perforée ou comportant un tissu métallique perméable aux ondes acoustiques formant une première face et une feuille de fermeture, généralement pleine, obturant les cellules et formant une deuxième face du revêtement.

Les cellules des panneaux acoustiques agissent comme de petits résonateurs permettant l'absorption des ondes acoustiques sur une plage de fréquence donnée. Pour qu'un résonateur soit efficace, sa plage de fréquences d'absorption doit comprendre la fréquence à laquelle le panneau est soumis. Or, les cavités de taille relativement réduite des panneaux acoustiques correspondent à des fréquences élevées. Il est ainsi difficile d'obtenir un panneau alvéolaire efficace pour certaines applications soumises à des basses fréquences.

Par exemple, les groupes propulseurs des aéronefs commerciaux comportent un moteur à turbomachine et une nacelle pouvant comprendre un revêtement acoustique pour atténuer le bruit généré pendant le fonctionnement du moteur. Néanmoins, les fréquences acoustiques générées par le moteur d'un aéronef sont relativement basses et s'étendent sur une plage assez large. Les basses fréquences devant être atténuées sont par exemple les fréquences en dessous de 2000 Hz selon le moteur considéré. L'adoption de groupes propulseurs de grand diamètre tend à faire baisser plus encore les fréquences des ondes acoustiques qu'ils génèrent, notamment en dessous de 1000Hz. Or, la nécessité d'avoir des cellules de grand volume pour absorber des fréquences basses mène à des panneaux de grande épaisseur, peu compatibles d'une application aéronautique.

Le but de l'invention est de remédier au moins partiellement à ces inconvénients.

### Résumé

A cet effet, il est proposé un dispositif d'isolation acoustique, notamment pour un aéronef, comprenant une première feuille percée d'orifices, dite feuille ouverte, perméable aux ondes acoustiques, une deuxième feuille, dite feuille de fermeture, et un revêtement d'isolation acoustique disposé entre lesdites première feuille et deuxième feuille, le revêtement étant constitué par accolement selon une direction dite transversale de plusieurs structures alvéolaires, chacune desdites structures alvéolaires étant formée par accolement dans la direction transversale d'une première bande longitudinale et d'une deuxième bande longitudinale, la première bande et la deuxième bande formant une structure alvéolaire étant configurées de sorte que ladite structure alvéolaire présente dans une direction longitudinale, orthogonale à la direction transversale : au moins une cavité, ouverte au niveau de la première feuille et dont une section se rétrécit progressivement entre la première feuille et la deuxième feuille jusqu'à fermeture de ladite cavité, dite cavité quart-d'onde, un premier accolement de deux parois, respectivement de la première bande et de la deuxième bande, au contact l'une de l'autre, de sorte qu'un passage est ménagé entre ladite cavité et une autre cavité, ladite autre cavité, appelée cavité Helmholtz, qui est de section progressivement croissante entre la première feuille et la deuxième feuille et qui est fermée au niveau de la première feuille et au niveau de la deuxième feuille par un bord de fermeture, et un deuxième accolement de deux parois, respectivement de la première bande et de la deuxième bande, au contact l'une de l'autre, chacune des parois desdits premier et deuxième accolements comprenant une portion disposée le long dudit bord de fermeture de la cavité Helmholtz, dite portion sacrificielle.

Ainsi, le dispositif selon la présente invention permet un traitement acoustique performant des fréquences basses, tout en ayant de bonnes qualités structurales et pouvant être produit industriellement, la portion sacrificielle évitant en particulier de percer la cavité Helmholtz lorsque la première feuille est percée pour la rendre perméable aux ondes acoustiques.

Selon un autre aspect, la portion sacrificielle présente une hauteur dans une direction, dite verticale, orthogonale à la direction longitudinale et à la direction transversale, comprise entre comprise entre 1% et 30% de la hauteur dans la direction verticale du revêtement, de préférence comprise entre 5% et 25%.Selon un autre aspect, chaque portion sacrificielle s'étend selon la direction longitudinale et la direction verticale.

Selon un autre aspect, au moins une structure alvéolaire présente un motif qui se répète le long d'au moins l'une des directions longitudinale ou transversale.

Selon un autre aspect, le motif comprend une succession d'un ensemble d'une cavité quart d'onde et d'une cavité Helmholtz.

Selon un autre aspect, le motif comprend une succession d'un ensemble de deux cavités quart d'onde et d'une cavité Helmholtz.

Selon un autre aspect, le motif comprend une succession d'un ensemble de deux cavités Helmholtz et d'une cavité quart d'onde.

Selon un autre aspect, l'une au moins des structures alvéolaires comprend au moins un conduit d'évacuation d'eau hors du revêtement.

Selon un autre aspect, l'une au moins des structures alvéolaires comprend au moins deux conduits d'évacuation d'eau hors du revêtement, chacun des conduits étant à une hauteur donnée, distincte, le long de la direction verticale.

Selon un autre aspect, le dispositif comprend, entre une cavité Helmholtz et une cavité quart d'onde, au moins une cavité, dite cavité intermédiaire, qui est fermée.

L'invention a également pour objet une nacelle pour un moteur d'aéronef, comprenant un dispositif d'isolation acoustique tel que décrit précédemment.

L'invention a également pour objet un aéronef comprenant un dispositif d'isolation acoustique tel que décrit précédemment.

### Brève description des dessins

D'autres caractéristiques, détails et avantages apparaîtront à la lecture de la description détaillée ci-après, et à l'analyse des dessins annexés, sur lesquels :
**Fig. 1**

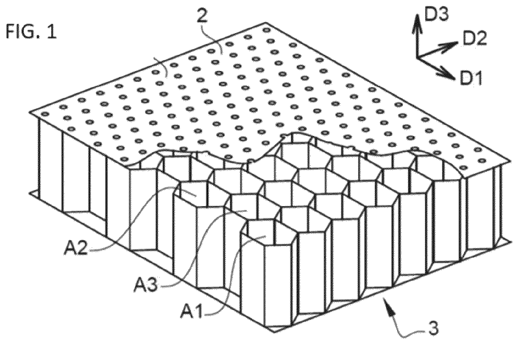

   [Fig. 1] représente, selon une vue schématique en trois dimensions, un revêtement acoustique conforme à l'état de la technique.
**Fig. 2**

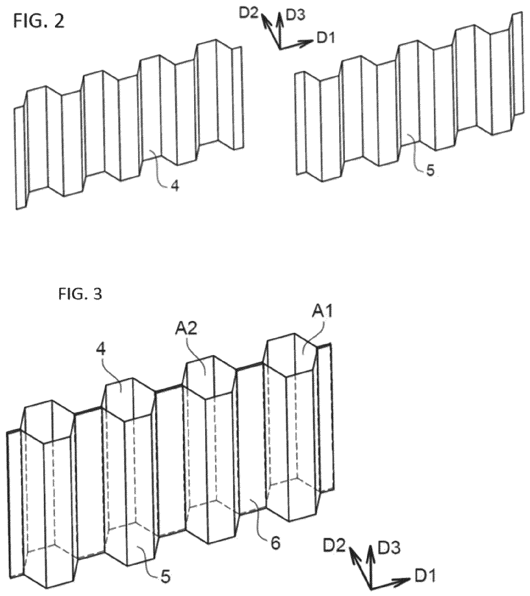

   [Fig. 2] représente, selon une vue schématique en trois dimensions, des éléments constitutifs du revêtement de la figure 1.
**Fig. 3**
   [Fig. 3] représente, selon une vue schématique en trois dimensions, les éléments de la figure 2 après assemblage.
**Fig. 4**

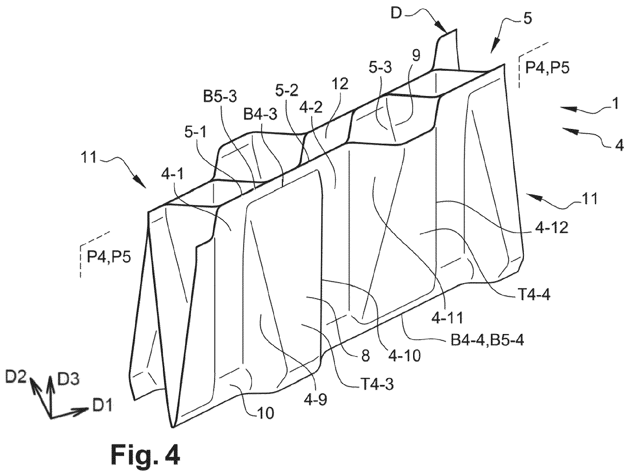

   [Fig. 4] est une vue schématique en perspective d'un détail d'un revêtement d'isolation acoustique d'un dispositif d'insonorisation selon un premier mode de réalisation de l'invention.
**Fig. 5**

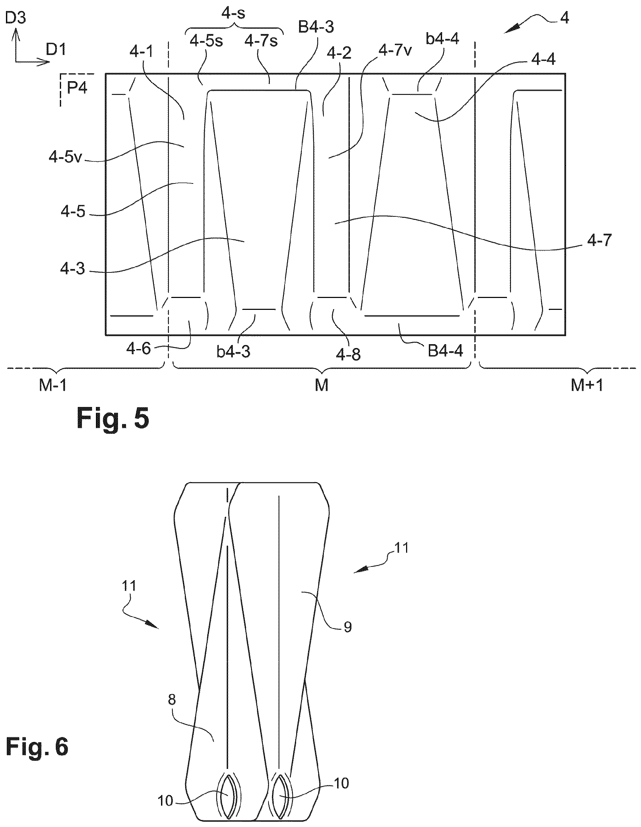

   [Fig. 5] est une vue schématique de face du détail de la figure 4.
**Fig. 6**
   [Fig. 6] est une vue schématique de côté du détail de la figure 4.
**Fig. 7**

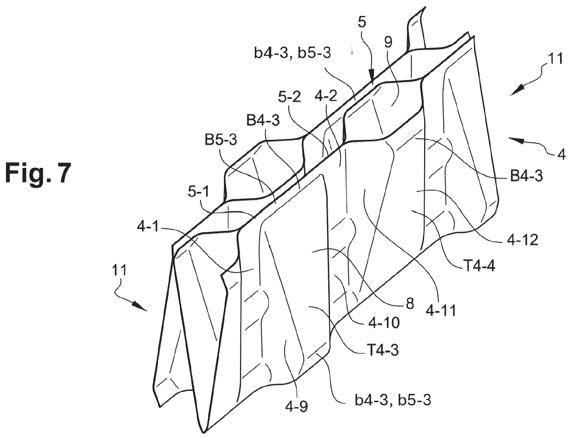

   [Fig. 7] est une vue schématique en perspective d'un détail d'un revêtement d'isolation acoustique d'un dispositif d'insonorisation selon un deuxième mode de réalisation de l'invention.
**Fig. 8**

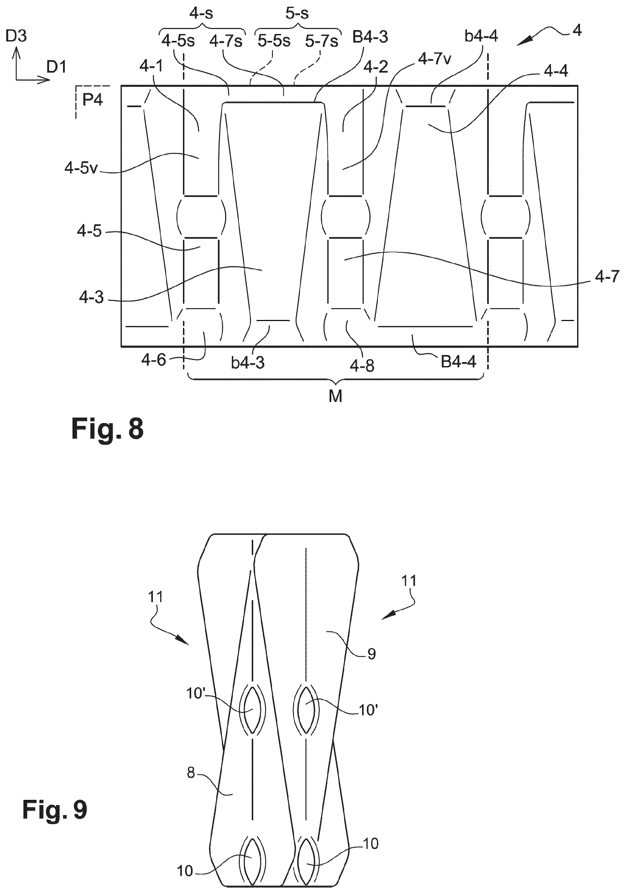

   [Fig. 8] est une vue schématique de face du détail de la figure 7.
**Fig. 9**
   [Fig. 9] est une vue schématique de côté du détail de la figure 7.
**Fig. 10**

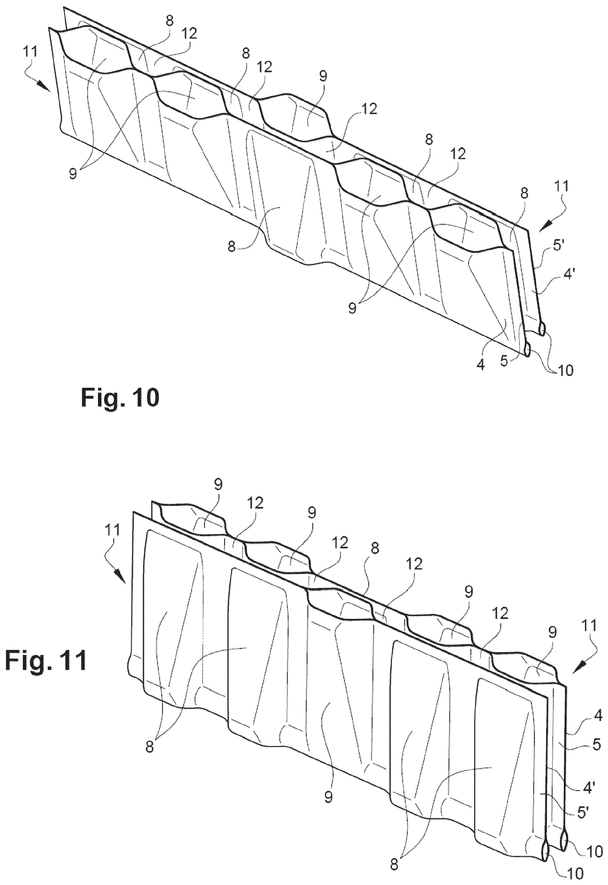

   [Fig. 10] est une vue schématique en perspective d'un détail d'un revêtement d'isolation acoustique d'un dispositif d'insonorisation selon un troisième mode de réalisation de l'invention.
**Fig. 11**
   [Fig. 11] est une autre vue schématique en perspective du détail de la figure 10.
**Fig. 12**

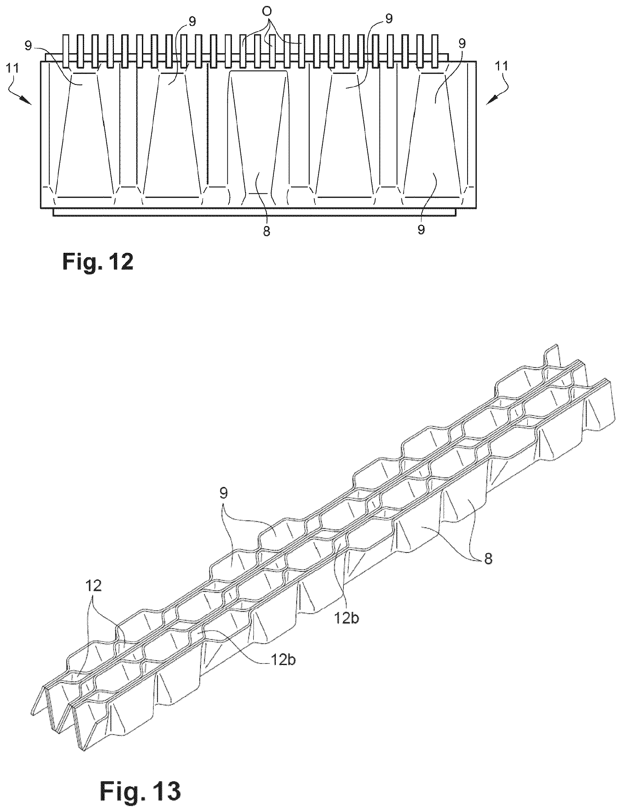

   [Fig. 12] est une vue schématique de face du détail de la figure 10.
**Fig. 13**
   [Fig. 13] est une vue en perspective du détail de la figure 10 selon une variante de réalisation.
**Fig. 14**

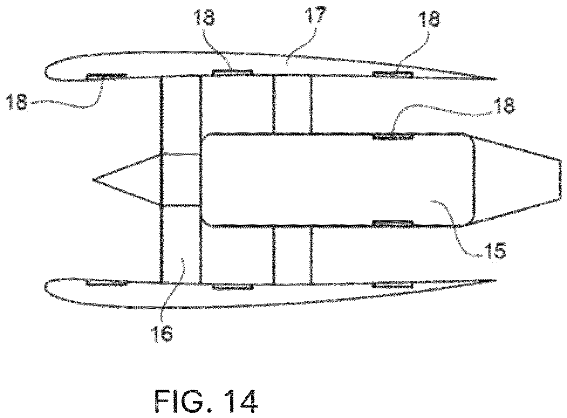

   [Fig. 14] représente schématiquement selon une vue en coupe un groupe propulseur d'aéronef dont la nacelle est équipée d'un dispositif d'insonorisation selon la présente invention.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en œuvre relativement simplifiées de la présente invention. Comme l'homme du métier le comprend, d'autres mises en œuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en œuvre de la présente invention, ainsi que les exemples spécifiques de celle-ci, visent à englober à la fois les équivalents structurels et fonctionnels de celle-ci, qu'ils soient actuellement connus ou développés à l'avenir.

La figure 1 représente schématiquement un dispositif d'isolation acoustique comportant un revêtement insonorisant, connu dans l'état de la technique. Il comporte des cellules (ou cavités) A1, A2, A3, etc. juxtaposées les unes aux autres dans deux directions orthogonales entre elles de sorte à former une structure alvéolaire. Une première direction D1 de juxtaposition des cellules est dite longitudinale, et une deuxième direction D2 de juxtaposition des cellules, orthogonale à la première direction D1, est dite transversale. Une troisième direction D3, dans laquelle s'étend l'épaisseur du panneau, est définie orthogonalement à la première direction D1 et à la deuxième direction D2. La troisième direction D3 peut être conventionnellement appelée direction verticale D3 (sans qu'il soit pour autant préjugé de l'orientation du revêtement insonorisant).

Comme il ressort de la figure 1, sur une première face du revêtement, les cellules A1...A3 sont ouvertes. Une feuille perforée 2 les recouvre, formant une surface résistive permettant la communication des cellules A1...A3 avec le milieu extérieur, de sorte que la première face est dite ouverte. La feuille 2 est appelée feuille d'ouverture.

Sur une deuxième face, les cellules A1...A4 sont fermées par une feuille de fermeture, 3, par exemple une feuille pleine, obstruant le fond des cellules.

Dans l'état de la technique, tout comme dans l'invention, la feuille de fermeture est généralement une feuille pleine. Il peut néanmoins s'agir d'une feuille présentant des trous. En effet, une feuille pleine est employée pour les traitements acoustiques simples, dit SDOF selon l'expression anglophone « Single Degree of Freedom » (simple degré de liberté) et forme une peau arrière réfléchissante vis-à-vis des ondes acoustiques. Une feuille de fermeture présentant des trous est employée pour les traitements acoustiques dit DDOF selon l'expression anglophone « Double Degree of Freedom » (double degré de liberté) pour lesquels un empilement de deux étages de nid d'abeille est réalisé, les étages étant séparés par une peau poreuse intermédiaire formée par ladite feuille de fermeture.

Bien qu'il ne soit pas exclu, l'empilement de deux structures alvéolaires telles que formées dans l'invention, et dont des exemples sont décrits ci-après en référence aux figures suivantes, présente un intérêt généralement limité, car un tel empilement de structures conduit de manière générale à un revêtement acoustique épais, tandis que la structure développée dans l'invention permet de limiter l'épaisseur de la structure comparativement aux structures connues permettant le traitement de fréquences acoustiques similaires.

Sur la figure 1, les cellules de la structure alvéolaire ici représentées sont dites hexagonales, en ce que leur volume est celui d'un prisme droit de base hexagonale s'étendant entre la première face et la deuxième face du revêtement insonorisant.

Les cellules hexagonales sont disposées en quinconce, avec un décalage longitudinal permettant de s'imbriquer sans volume mort.

La figure 2 représente deux bandes permettant de constituer la structure cellulaire du revêtement de la figure 1, selon une technique connue dans l'état de la technique sur laquelle se fonde la présente invention.

En particulier, une première bande 4 présente une ondulation formée par des pliages réguliers successifs. Chaque ondulation forme la moitié d'une cellule hexagonale. Une deuxième bande 5 est identique à la première bande 4.

La première bande 4 et la deuxième bande 5 sont accolées l'une à l'autre, de sorte à former une structure présentant une succession longitudinale de cellules hexagonales A1, A2 ; entre lesquelles des parois 6 sont au contact et liées entre elles, par exemple par collage ou soudage. En accolant et en fixant transversalement (selon la deuxième direction D2) à la structure de la figure 3 une autre structure identique, et ainsi de suite, la structure cellulaire du revêtement de la figure 1 est obtenue.

On décrit maintenant un dispositif d'isolation acoustique D (encore appelé dispositif d'insonorisation D) selon la présente invention, notamment pour une nacelle de moteur d'un aéronef, en référence aux figures 4 et suivantes.

Comme il ressort de la figure 1, le dispositif D comprend un revêtement d'isolation acoustique, référencé 1 sur les figures. Le dispositif D comprend également une première feuille 2, dite d'ouverture, et une deuxième feuille 3, dite de fermeture, de préférence pleine, le revêtement 1 s'étendant entre les première et deuxième feuilles 2, 3, comme il a déjà été décrit en relation avec les figures 1 à 3. Les extrémités du revêtement 1 dans le plan (D1, D2) sont appelées première face et deuxième face. La première face débouche sur la première feuille 2 et la deuxième face débouche sur la deuxième feuille 3.

On décrit maintenant l'invention en relation avec les figures 4, 5 et 6.

La figure 4 représente des éléments, à savoir des paires de bandes 4 et 5, constitutives du revêtement d'isolation acoustique 1. Plus précisément, la figure 4 représente une petite portion longitudinale (selon la direction longitudinale) des bandes accolées et fixées l'une à l'autre transversalement (selon la direction transversale D2).

Chacune des bandes 4, 5 s'étend essentiellement selon un plan P4, P5 lui même s'étendant selon la direction longitudinale D1 et la direction verticale D3.

Chaque paire de bandes 4 et 5 forme une première structure alvéolaire 11.

Chacune des bandes présente des déformations, respectivement dans une seule direction transversale. Les déformations forment ainsi des creux vis-à-vis respectivement de leurs plans respectifs.

Selon leur mode de constitution le plus simple, chaque bande est métallique, et mise en forme par une technique de formage. Les techniques de formage envisageables comportent par exemple l'emboutissage et l'hydroformage.

On décrit en détail la bande 4.

Comme visible sur les figures 4 à 6, la première bande 4 comporte une succession d'un ensemble de motifs M qui se répètent le long de la direction longitudinale D1. Chaque motif M comprend une première portion 4-1, et une deuxième portion 4-2 disposées de part et d'autre d'une première demi-cavité 4-3. Chaque motif M comprend également une deuxième demi-cavité 4-4.

On parle de demi-cavités 4-3, 4-4 car l'assemblage de la bande 4 à la bande 5 forme des cavités « complètes » par mise en regard des demi-cavités 4-3, 4-4 avec des demi-cavités de la bande 5, comme il sera détaillé ultérieurement.

La première portion 4-1 comprend une paroi 4-5, s'étendant sensiblement dans le plan P4, et prolongée d'un demi-passage 4-6 formé entre la première demi-cavité 4-3 et la deuxième demi-cavité 4-4 du motif précédent M-1. Le demi-passage 4-6 comprend une demi-sphère solidaire de la paroi rectangulaire 4-5.

La paroi 4-5 présente une forme générale de L comprenant essentiellement deux parties de rectangles autour de la première demi-cavité 4-3. Une première paroi, dite demi-paroi sacrificielle, 4-5s, s'étend au-dessus d'un bord de fermeture de la première demi-cavité 4-3, formant extrémité (selon la direction D3) du revêtement 1, tandis qu'une deuxième paroi, 4-5v, s'étend principalement le long de la direction D3.

La deuxième portion 4-2 comprend une paroi 4-7 s'étendant sensiblement dans le plan P4, et prolongée d'un demi-passage 4-8 formé entre la première demi-cavité 4-3 et la deuxième demi-cavité 4-4 du motif M. Le demi-passage 4-8 comprend une demi-sphère solidaire de la paroi rectangulaire 4-5.

La paroi 4-7 comprend deux parties de rectangles formant un L autour de la première demi-cavité 4-3. Une première paroi, dite demi-paroi sacrificielle, 4-7s, s'étend au-dessus d'un bord de fermeture de la première demi-cavité 4-3, formant extrémité (selon la direction D3) du revêtement 1, tandis qu'une deuxième paroi, 4-7v, s'étend principalement le long de la direction D3.

La demi-paroi sacrificielle 4-7s s'étend dans le prolongement de la demi-paroi sacrificielle 4-5s. L'ensemble des demi-paroi sacrificielles 4-5s, 4-7s constitue une paroi sacrificielle 4-s du motif M de la bande 4. La dimension dans la direction D3 de la portion sacrificielle 4-s est avantageusement comprise entre 0,1mm et 1cm, de préférence entre 0,5mm et 3mm. Dit autrement, la portion sacrificielle a une hauteur (selon D3) comprise entre 1% et 30% de la hauteur (selon D3) du revêtement 1, préférentiellement une hauteur comprise entre 5% et 25% de la hauteur (selon D3) du revêtement 1.

Sur les figures 4 à 6, la première demi-cavité 4-3 est délimitée par un trapèze T4-3 dont une petite base b4-3 et une grande base B4-3 s'étendent le long de la direction D1. Sur les figures 4 à 6, la grande base B4-3 du motif M est disposée au-dessus de la petite base b4-3. Deux parois 4-9, 4-10, sensiblement triangulaires, dans un plan (D2, D3), relient une extrémité de la grande base B4-3 à une extrémité de la petite base b4-3 ainsi que, respectivement, à la première portion 4-1 et à la deuxième portion 4-2.

Sur les figures 4 à 6, la deuxième demi-cavité 4-4 est délimitée par un trapèze T4-4 dont une petite base b4-4 et une grande base B4-4 s'étendent le long de la direction D1. Sur les figures 4 à 6, la petite base b4-4 du motif M est disposée au-dessus de la grand base B4-3. Deux parois, 4-11, 4-12, sensiblement triangulaires, dans un plan (D2, D3), relient une extrémité de la grande base B4-4 à une extrémité de la petite base b4-4 ainsi que, respectivement, à la deuxième portion 4-2 et à la première portion 4-1 du motif suivant M+1.

Dans l'exemple ici représenté, la première bande 4 et la deuxième bande 5 sont de formes similaires, en miroir l'une de l'autre, de sorte qu'elles sont symétriques l'une de l'autre, lorsqu'elles sont accolées, par rapport à leur plan d'accolement.

La première bande 4 et la deuxième bande 5 sont accolées et assemblées, à savoir que le plan P4 est mis au contact avec le plan P5. Les bandes sont fixées entre elles, par exemple par collage ou soudage de leurs zones de contact, en particulier entre leurs premières portions 4-1, 5-1 respectives et entre leurs deuxièmes portions 4-2, 5-2 respectives. La première demi-cavité 4-3 de la première bande 4 est mise en regard de la première demi-cavité 5-3 de la deuxième bande 5, formant ainsi une première cavité 8. Les grandes bases B4-3 et B5-3 sont mises en contact l'une avec l'autre et forment le bord de fermeture de la cavité 8. La deuxième demi-cavité 4-4 de la première bande 4 est mise en regard de la deuxième demi-cavité 5-4 de la deuxième bande 5, formant ainsi une deuxième cavité 9. Les petites bases b4-4, b5-4 sont mises en contact l'une de l'autre et forment le fond du revêtement 1 (en position horizontale de l'aéronef). Les demi-passages de la première bande 4 sont mis en regard des deuxième demi-passages de la deuxième bande 5, formant ainsi un passage 10 entre la première cavité 8 et la deuxième cavité 9.

Les parois sacrificielles 4-s, 5-s sont également mises en contact lorsque les bandes 4 et 5 sont accolées l'une à l'autre.

Dit autrement, lorsque les bandes 4 et 5 sont accolées l'une à l'autre, la paroi 4-1 est en contact de la paroi 5-1 (formant un premier accolement) d'une part et, d'autre part, la paroi 4-2 est en contact de la paroi 5-2 (formant un deuxième accolement), chacun des premier et deuxième accolements comprenant une portion sacrificielle, respectivement 4-5s,5-5s ; 4-7s, 5-7s.

L'assemblage de la première bande 4 avec la deuxième bande 5 forme ainsi une structure 11 tridimensionnelle, s'étendant essentiellement selon la direction longitudinale D1, et représentée aux figures 4 à 6.

Comme il ressort des figures, la deuxième cavité 9 est ouverte sur une face dans un plan (D1, D2), cette face correspondant à la première face 2 du revêtement 1. L'ouverture de la deuxième cavité 2 est de section hexagonale. La section de la première cavité 9 se restreint progressivement en direction du fond F de la deuxième cavité 9. Dans l'exemple ici représenté, la section se restreint jusqu'à s'annuler et prendre la forme d'une ligne droite à la jonction de la première bande 4 avec la deuxième bande 5 formant le fond de la deuxième cavité 9, au droit d'une médiane de l'hexagone formé par l'ouverture de la deuxième cavité 9. Le fond peut être situé au niveau de la deuxième feuille 3, comme dans l'exemple ici représenté, ou entre la première face 2 et la deuxième face 3. Ainsi, dans l'exemple ici représenté, au niveau du fond, c'est à dire au niveau de la deuxième face 3 du revêtement insonorisant une fois ce dernier formé (exception faite de la feuille de fermeture, de faible épaisseur, à savoir ici une feuille pleine, fermant ladite deuxième face 3), la première bande 4 est au contact de la deuxième bande 5.

Comme il ressort également des figures, la première cavité 8, qui s'étend avantageusement sur toute la hauteur (dimensions selon la troisième direction D3) de la structure 11, sera fermée une fois le revêtement constitué tant au niveau de la première face 2 qu'au niveau de la deuxième face 3. En effet, la deuxième cavité 8 présente une forme identique à celle de la deuxième cavité 9, mais avec une orientation opposée selon la troisième direction D3. Ainsi, au niveau de la première face ou à proximité de cette dernière, la première bande 4 est au contact de la deuxième bande 5, ce qui ferme ladite première cavité 8 au niveau de ladite première face 2 du revêtement 1. Notamment, le contact entre la première bande 4 et la deuxième bande 5 peut prendre la forme d'une ligne droite au droit d'une médiane de l'hexagone formé par la section de la première cavité 8 au niveau de la deuxième face 3. Ainsi, au niveau de la deuxième face 3, où la première cavité 8 de la structure 11 est ouverte selon une section hexagonale, ladite première cavité 8 est fermée une fois le revêtement constitué par la feuille de fermeture formant la deuxième face 3.

La configuration ici représentée permet de maximiser la hauteur des deuxième cavités 9, tout en maximisant le volume des premières cavités 8 (ce qui permet de traiter des fréquences plus basses qu'avec des cavités de volume plus faible), sans perdre de surface acoustique. Elle ne présente pas de ruptures de pente dans la hauteur des parois, ce qui conduirait à une solution difficilement fabricable.

On note que chaque deuxième cavité 9 forme un résonateur quart d'onde. L'ensemble comportant le passage 10 et la cavité 8 forme un résonateur de Helmholtz dont le col est formé par le passage 10. Le résonateur quart d'onde et le résonateur de Helmholtz sont donc couplés en série à l'entrée du passage 10. Par la suite, on appelle les cavités 8 « cavités Helmholtz » et les cavités 9 « cavités quart d'onde ».

Comme il ressort des figures, le revêtement 1 comprend deux structures 11 adjacentes transversalement montées en quinconce, c'est-à-dire que chaque première cavité 8 d'une structure 11 est adjacente, dans la direction transversale D2, à deux deuxièmes cavités 9 de structures voisines, et chaque deuxième cavité 9 d'une structure 11 est adjacente, dans la direction transversale D2, à deux premières cavités 8 de structures voisines. En d'autres termes, en quinconce ne signifie pas une alternance ou succession mais un décalage sur deux rangs.

Une telle configuration en quinconce peut être obtenue par un montage alterné de structures 11 tournées à 180° par rapport à ses voisines, ou par un montage avec un décalage longitudinal d'une structure 11 sur deux. La solution mettant en œuvre un décalage longitudinal présente néanmoins la difficulté technique que les structures présentent après assemblage des extrémités longitudinales décalées, ce qui nécessite un traitement particulier des bords longitudinaux du revêtement (découpe, ou comblement de ce décalage, etc.).

Du fait des restrictions de section respectives des premières cavités 8 et des deuxièmes cavités 9, lesdites premières cavités 8 et deuxièmes cavités 9 s'imbriquent les unes avec les autres transversalement, de sorte que les parois limitant dans la direction transversale D2 lesdites premières cavités et deuxièmes cavités viennent au contact les unes des autres.

Il est notable que l'accolement de deux structures 11 forme en outre des cavités intermédiaires 12. Les cavités intermédiaires 12 sont dans des intervalles longitudinaux situés entre les premières cavités et les deuxièmes cavités de deux structures 11 adjacentes transversalement. Les cavités intermédiaires 12 ont une section sensiblement en parallélogramme au niveau de la première face 1. Les cavités intermédiaires 12 s'étendent transversalement entre les parois 4-2, 4-11, 5-2, 5-11 des premières bandes et deuxièmes bandes accolées entre elles pour former les structures 11. Les cavités intermédiaires 12 sont fermées au niveau de la deuxième face 3 par la feuille de fermeture installée au niveau de ladite deuxième face 3 du revêtement insonorisant. La section des cavités intermédiaires 12 évolue dans l'épaisseur du revêtement insonorisant (dans la troisième direction D3), car cette section dépend des sections des cavités Helmholtz 8 et quart d'onde 9 délimitées autour de la cavité intermédiaire 12.

La formation d'une structure alvéolaire de revêtement insonorisant par accolement de structures de géométries complémentaires, leur permettant de s'imbriquer en formant entre elles les cavités souhaitées, permet en outre d'éviter l'accolement de multiples parois dans la structure alvéolaire, ce qui optimise la masse du revêtement.

On note que sur la première face 1 débouchent ainsi les deuxièmes cavités 9 et les cavités intermédiaires 12, de manière régulière et parfaitement imbriquées. Il est également notable que les premières cavités 8 d'ouverture hexagonale et les cavités intermédiaires 12 d'ouverture à section en parallélogramme débouchent au niveau de la deuxième face 3.

Les cavités intermédiaires 12 forment des résonateurs capables de traiter des plages de fréquences acoustiques différentes (a priori plus élevées) que celles traitées par les premières cavités et deuxièmes cavités formant le couplage des résonateurs de Helmholtz et quart d'onde.

Ainsi, le revêtement acoustique présente une structure alvéolaire présentant trois types et dimensions de cavités, ce qui permet de traiter une plage de fréquence très large comparativement à un revêtement présentant une seule géométrie de cellules.

La structure alvéolaire obtenue par accolement transversal de structures 11 elles-mêmes obtenues par accolement transversal de bandes 4,5 mises en forme est ainsi relativement simple à réaliser et à mettre en œuvre. Il est en outre possible de donner une courbure, notamment transversale, à cette structure alvéolaire.

Comme déjà indiqué, le dispositif insonorisant D est obtenu en ajoutant une feuille de fermeture, typiquement une feuille pleine, sur l'une des surfaces de la structure alvéolaire, formant ainsi une face fermée, et une feuille résistive (par exemple une feuille de métal ou de carbone dotée de multiples perforations ou une feuille comportant un tissu métallique perméable aux ondes acoustiques) sur l'autre face qui reste ainsi ouverte.

On note que les parois sacrificielles 4-s, 5-s assurent que, lors du perçage de la feuille d'ouverture 2, aucune cavité Helmholtz 8 ne soit percée, ce qui la rendrait inefficace pour l'absorption des ondes acoustiques. Ainsi, il est possible que les parois 4-s, 5-s soient touchées au cours du perçage mais leur hauteur (dans la direction D3) assure que les cavités Helmholtz, elles, restent intactes.

Comme visible particulièrement sur la figure 6, le dispositif D comprend également des conduits de drainage. Il s'agit des passages 10 (formés par deux demi-passages dans chacune des bandes 4, 5) qui s'étendent sur toute la longueur de la structure alvéolaire 11.

Les conduits de drainage 10 permettent ainsi l'évacuation de l'eau qui pourrait pénétrer ou se former par condensation dans la structure alvéolaire du revêtement.

En d'autres termes, le drainage consiste à mettre en relation les cavités entre elles par des passages de faible section permettant la circulation par gravité de l'eau présente dans la structure, jusqu'à un ou plusieurs points d'évacuation. Sur les modes de réalisation illustrés, les passages 10 (formés par deux demi-passages dans chacune des bandes 4, 5) s'étendent sur toute la longueur de la structure alvéolaire 11, c'est-à-dire non seulement entre les cavités 8, 9 mais également dans les cavités intermédiaires 12.

Pour ce qui concerne les premières et deuxièmes cavités 8, 9, il convient de permettre le drainage au niveau de la deuxième face 3, qui est fermée. Pour cela, outre le passage 10 formé entre une première cavité 8 et une deuxième cavité 9 voisine, un passage 10 analogue ou de plus faible section est formé (par un demi-passage formé dans la deuxième bande 5 et un demi-passage formé en correspondance dans la première bande 4) vers l'autre deuxième cavité 8 voisine. Ainsi, dans une structure 11, un écoulement de l'eau est possible sur toute la longueur de la structure entre les premières et deuxièmes cavités, au niveau de la deuxième face 3, jusqu'à évacuation du revêtement typiquement en un point bas de celui-ci.

Concernant les cavités intermédiaires, fermées au niveau de la deuxième surface, elles sont mises en communication entre elles par un drain, par exemple une échancrure longitudinale, formé au niveau de la deuxième face 3.

Comme il ressort des figures 4 à 6, les passages 10 sont disposés au niveau du fond du revêtement 1, ce qui simplifie l'évacuation de l'eau.

On décrit maintenant le deuxième mode de réalisation de l'invention, en relation avec les figures 7, 8, et 9.

Le dispositif d'insonorisation D selon ce deuxième mode de réalisation est identique au dispositif d'insonorisation D selon le premier mode de réalisation, à ceci près qu'il comprend un niveau supplémentaire de conduits de drainage 10'.

Comme il ressort des figures 7 à 9, les passages 10' s'étendent dans le revêtement 1 dans les cavités 8, 9 et 12, et dans les parois verticales 4-5v, 4-7v, sensiblement à mi-hauteur des trapèzes et des parois verticales 4-5v (5-5v) et 4-7v (5-7v).

Les passages 10' s'étendent parallèlement aux passages 10 sur les figures 7 à 9.

Ce mode de réalisation permet un drainage plus efficace des condensats, puisqu'il permet de doubler le débit d'évacuation de l'eau, et permet également d'évacuer l'eau plus facilement, selon la position de l'aéronef.

On note que la hauteur des passages 10' peut varier, selon des contraintes de propagations des ondes acoustiques dans le revêtement 1 et/ou selon des contraintes de fabrication.

On note également que les passages 10' peuvent être inclinés, voire convergents, avec les passages 10, selon le chemin que l'on souhaite faire prendre à l'eau dans le revêtement 1.

On note qu'en variante, les passages 10' peuvent se substituer aux passages 10.

On ne décrit pas plus le mode de réalisation des figures 7 à 9 et l'on se réfèrera à ladescription du premier mode de réalisation pour plus de détails.

On décrit maintenant le troisième mode de réalisation, en références aux figures 10, 11 et 12.

Ce mode de réalisation est semblable aux deux premiers modes de réalisation décrits, en ce que le dispositif d'insonorisation D comprend une succession de cavités quart d'onde 8, Helmholtz 9 et intermédiaires 12. Le dispositif D comprend également des portions sacrificielles associées à chaque cavité Helmholtz 8. Le dispositif D comprend aussi des passages 10 de drainage situés au niveau du fond du revêtement 1.

Le dispositif d'insonorisation D selon ce troisième mode de réalisation diffère des deux modes de réalisation précédents par les motifs M.

Comme visible sur les figures 10 à 12, une première paire de bandes 4, 5, comprend de part et d'autre de chaque cavité Helmholtz 8 deux cavités quart d'onde 9 successives. Sur le détail de la figure 10, on observe successivement deux cavités quart d'onde 9, puis une cavité Helmholtz 8, puis deux cavités quart d'onde 9.

Une deuxième paire de bandes 4', 5' comprend de part et d'autre de chaque cavité quart d'onde 9 deux cavités Helmholtz 8 successives. Sur le détail de la figure 10, on observe successivement deux cavités Helmholtz 8, puis une cavité quart d'onde 9 puis deux cavités Helmholtz 8.

Cette succession de plusieurs cavités Helmholtz 9 permet d'élargir la bande passante des fréquences traitées acoustiquement par le dispositif D et de centrer la bande passante à des fréquences plus basses, par exemple de 1000 Hz à 3000 Hz.

Selon ce mode de réalisation, les cavités intermédiaires 12 entre une cavité Helmholtz 8 et une cavité quart d'onde 9 sont de type hexagonales, comme déjà décrit en relation avec les deux premiers modes des réalisation. Les cavités intermédiaires 12 entre deux cavités Helmholtz 8 ou deux cavités quart d'onde présentent une forme différente, avec une section délimitée par un bord en U et un bord rectiligne, dans un plan orthogonal au plan d'accolement P4, P5.

Comme il ressort déjà de la description qui précède, pour chacun des modes de réalisation illustrés, les parois sacrificielles garantissent l'intégrité des cavités Helmholtz, ce qui rend le dispositif d'insonorisation D particulièrement efficace.

Sur la figure 12, on a représenté des orifices O de perçage de la feuille 2 pour illustrer que les cavités 8 restent intactes à l'issue de cette étape.

De surcroît, selon les motifs des trois modes de réalisation, on peut choisir les fréquences à absorber préférentiellement.

On ajoute que les passages 10, 10' assurent une évacuation rapide de tout condensat qui pourrait abîmer le dispositif D.

On décrit maintenant l'invention en référence à la figure 13.

Comme il ressort de cette figure, il s'agit d'une variante du mode de réalisation déjà décrit en relation avec les figures 10 à 12.

Selon cette variante, au moins une cavité intermédiaire, référencée 12b, est fermée, par exemple par collage. De préférence, les cavités intermédiaires 12b se répartissent de manière régulière dans le revêtement 1. Par exemple, une rangée (suivant la direction D2 par exemple) de cavités intermédiaires est bouchée à une fréquence donnée. Sur la figure 13, la fréquence est d'une rangée sur trois. L'invention n'est pas limitée à cette fréquence et on peut notamment envisager une fréquence comprise entre 1 rangée sur 10 et 1 rangée sur 2, avantageusement 1 rangée sur 3 ou 1 rangée sur 4. Selon la direction D1, il y a alternance de deux cavités ouvertes et une cavité fermée sur les figures 10 à 12.

Alternativement, les cavités intermédiaires 12b se répartissent de manière irrégulière dans le revêtement 1.

Alternativement, les cavités intermédiaires sont remplies par de la matière.

Le fait de boucher certaines cavités intermédiaires permet d'élargir encore plus la bande passante des fréquences traitées acoustiquement par le dispositif D et de centrer la bande passante à des fréquences plus basses, par exemple de 500 Hz à 3500 Hz.

L'invention trouve une application préférentielle dans la formation d'un panneau insonorisant pour nacelle d'un groupe propulseur d'aéronef. Un groupe propulseur d'aéronef est représenté schématiquement en coupe à la figure 14. Il comporte un moteur 15 comportant une turbomachine équipée d'une soufflante 16, et qui est installé dans une nacelle 17. Le revêtement 18 peut être installé en divers endroits particulièrement exposés à des ondes acoustiques, dans la nacelle et plus généralement dans le groupe propulseur. Le revêtement insonorisant 18, selon un mode de réalisation de l'invention, peut être installé de sorte à former, au moins en partie, la face interne de la partie antérieure de la nacelle du groupe propulseur d'aéronef. Le revêtement 18 peut être installé dans une zone médiane de la face interne de la nacelle, à l'arrière de la soufflante 16. Le revêtement 18 peut également être installé sur une face interne de la partie arrière de la nacelle. Le revêtement 18 peut également être installé sur un carter du moteur 15.

L'invention ainsi développée offre un revêtement acoustique adapté au traitement de basses fréquences comparativement aux revêtements de même épaisseur connus dans l'état de la technique. En outre, grâce à la présence de cavités de trois tailles de formes différentes, à savoir des premières et deuxièmes cavités en communication entre elles pour former des résonateurs de Helmholtz pour le traitement de basses fréquences et des cavités intermédiaires pour le traitement de fréquences plus élevées, la plage des fréquences traitées par le revêtement est non seulement décalée par rapport à un panneau acoustique classique, mais également élargie.

La formation du revêtement, en particulier de sa structure alvéolaire, par des structures de géométries complémentaires permet d'éviter l'accolement de multiples parois, ce qui optimise la masse du revêtement. Ce revêtement peut être obtenu par des procédés industriels classiques de formage au cours desquels on est sûr de ne pas endommager les cavités formant résonateurs. Il est aisé à mettre en œuvre. Le drainage de l'eau présente dans la structure alvéolaire peut y être aisément organisé. L'invention est compatible de la formation d'un revêtement insonorisant courbe. Le revêtement trouve ainsi une application préférentielle dans les nacelles de groupe propulseur d'aéronefs, dont les surfaces présentent un ou deux rayons de courbure.

Des modifications et des améliorations aux mises en œuvre décrites ci-dessus de la présente invention peuvent apparaître à l'homme du métier. En particulier, les modes de réalisation décrits peuvent être combinés tant qu'ils ne sont pas incompatibles. La description ci-dessus est illustrative au travers d'exemples plutôt que limitative. La portée de la présente invention est donc limitée uniquement par la portée des revendications ci-dessous.

## Revendications

1. Dispositif d'isolation acoustique, notamment pour un aéronef, comprenant une première feuille (2), percée d'orifices, dite feuille d'ouverture, perméable aux ondes acoustiques, une deuxième feuille (3), dite feuille de fermeture, et un revêtement d'isolation acoustique (1) disposé entre lesdites première feuille (2) et deuxième feuille (3), le revêtement (1) étant constitué par accolement selon une direction dite transversale (D2) de plusieurs structures alvéolaires (11), chacune desdites structures alvéolaires (11) étant formée par accolement dans la direction transversale (D2) d'une première bande (4) longitudinale et d'une deuxième bande longitudinale (5), la première bande (4) et la deuxième bande (5) formant une structure alvéolaire (11) étant configurées de sorte que ladite structure alvéolaire (11) présente dans une direction longitudinale (D1), orthogonale à la direction transversale : au moins une cavité (9), ouverte au niveau de la première feuille (2) et dont une section se rétrécit progressivement entre la première feuille (2) et la deuxième feuille (3) jusqu'à fermeture de ladite cavité (9), dite cavité quart-d'onde, un premier accolement de deux parois (4-1, 5-1), respectivement de la première bande (4) et de la deuxième bande (5), au contact l'une de l'autre, un passage (10) étant ménagé entre ladite cavité (9) et une autre cavité (8), ladite autre cavité (8), appelée cavité Helmholtz, qui est de section progressivement croissante entre la première feuille (2) et la deuxième feuille (3) et qui est fermée au niveau de la première feuille (2) par un bord de fermeture, un deuxième accolement de deux parois (4-2, 5-2), respectivement de la première bande (4) et de la deuxième bande (5), au contact l'une de l'autre, chacune des parois (4-1, 5-1 ; 4-2, 5-2) desdits premier et deuxième accolements comprenant une portion disposée le long dudit bord de fermeture de la cavité Helmholtz (8), dite portion sacrificielle et formant extrémité du revêtement (1).

2. Dispositif selon la revendication 1, dans lequel la portion sacrificielle présente une hauteur dans une direction, dite verticale (D3), orthogonale à la direction longitudinale (D1) et à la direction transversale (D2), comprise entre 1% et 30% de la hauteur dans la direction verticale (D3) du revêtement (1), de préférence comprise entre 5% et 25%.

3. Dispositif selon l'une des revendications précédentes, dans lequel chaque portion sacrificielle s'étend selon la direction longitudinale (D1) et la direction verticale (D3).

4. Dispositif selon l'une des revendications précédentes, dans lequel au moins une structure alvéolaire présente un motif qui se répète le long d'au moins l'une des directions longitudinale (D1) ou transversales (D2).

5. Dispositif selon la revendication précédentes, dans lequel le motif comprend une succession d'un ensemble d'une cavité quart d'onde et d'une cavité Helmholtz.

6. Dispositif selon l'une des revendications précédentes, dans lequel le motif comprend une succession d'un ensemble de deux cavités quart d'onde et d'une cavité Helmholtz.

7. Dispositif selon l'une des revendications précédentes, dans lequel le motif comprend une succession d'un ensemble de deux cavités Helmholtz et d'une cavité quart d'onde.

8. Dispositif selon l'une des revendications précédentes, dans lequel l'une au moins des structures alvéolaires (11) comprend au moins un conduit d'évacuation d'eau hors du revêtement (1).

9. Dispositif selon la revendication précédente, dans lequel l'une au moins des structures alvéolaires (11) comprend au moins deux conduits d'évacuation d'eau hors du revêtement (1), chacun des conduits étant à une hauteur donnée, distincte, le long de la direction verticale (D3).

10. Dispositif selon l'une des revendications précédentes, comprenant entre une cavité Helmholtz et une cavité quart d'onde au moins une cavité, dite cavité intermédiaire, qui est fermée.

11. Nacelle pour un moteur d'aéronef, comprenant un dispositif d'isolation acoustique selon l'une des revendications précédentes.
